# EUROPEAN PATENT APPLICATION

(11) **EP 1 054 551 A2**
(43) Date of publication of application: **22.11.2000**
(21) Application number: 99308815.2
(22) Date of filing: 05.11.1999
(51) Int. Cl.: H04M 1/02

(54) **Portable telephone**

(30) Priority: 18.05.1999 GB 9911579
(71) Applicant: VTech Communications, Ltd., Tai Po, N.T (HK)
(72) Inventor: Murphy, Paul A., Esq., Tai Po, Hong Kong (CN)
(74) Representative: Loveless, Ian Mark

(57) **Abstract**

A telephone handset construction is provided, which has a moveable cover (22) which is articulable from a closed position to an open position. The articulatable cover remains contained within the telephone handset housing and does not extend from the housing when in an open position thereby precluding breakage or damage. When the cover is in the closed position, the cover overlays the input keypad and when in an one configuration it exposes the input keypad.

## Description

### THE TECHNICAL FIELD

The present invention is directed to portable battery-powered telephone handset constructions.

### BACKGROUND OF THE INVENTION

A conventional telephone handset typically incorporates on its face a numeric keypad which permits the user to enter the digits of a telephone number of a party the user wishes to telephone. The keypad typically comprises a matrix of momentary contact mechanical or electronic switches which are actuated by the user physically depressing a button associated with each switch, be it a push button or membrane keypad surface.

The typical telephone handset incorporates a keypad position on the front face of the phone and which accordingly is exposed when the telephone handset is powered and in a standby mode ready to receive an inbound call. One potential disadvantage of this prior art design is that objects may come into contact with the keypad when the telephone handset is, for example, in the user's pocket, purse, briefcase or even lying on a table or desk whereby such contact may trigger the keypad and execute unintentional commands. For example, the telephone handset may be bumped by another object when stored in a briefcase which may in turn cause the telephone handset to turn on or off, dial an undesired number, or otherwise perform an unintended operation which may either unnecessarily deplete the battery charge or cause the user to correct or undue the unintended operations before the telephone handset can be used again.

One prior art solution to prevent unintended contact with the handset keypad was to provide a relatively thin keypad cover typically hinged at the bottom of the front face of the phone which cover would be flipped open to reveal the handset keypad. The NOKIA 8100 cellular phone is a further prior art device which incorporates a keypad cover which slides along the plane of the front surface of the phone to alternatively cover and uncover the keypad in a telescopic fashion. One disadvantage of these designs is that they create a moveable structure member which may potentially be susceptible to damage or breakage. A further prior art solution was to permit the user through pressing a sequence of keys to "lock" the handset keypad. In this manner, once locked, the handset did not recognise any further keys being pressed until the handset was first "unlocked" typically by pressing another sequence of keys. One disadvantage of this design is that the user must manually unlock the keypad before the handset can be used. When attempting to place a call while driving a motor vehicle the added step of having to enter a predetermined sequence of numbers to unlock the handset is an additional potential distraction.

We have appreciated the need to protect the handset keypad from unintended operation.

### SUMMARY OF THE INVENTION

In a broad aspect, the invention provides a handset construction which includes a retractable cover for alternatively covering and exposing the handset keypad.

An embodiment of this provides a retractable keypad cover which, when open revealing the keypad, remains within the handset housing so as not likely to be broken or damaged, and which when closed protects the handset keypad from unintended operation.

In particular, there is provided a portable telephone handset apparatus (10) comprising: a main body portion (13) for substantially containing the electronic functional components of the telephone handset apparatus including a user input keypad (30), the main body portion having a longitudinal axis, a top region, a bottom region substantially connecting the front and back regions, and two opposed side regions: characterised by an articulable cover member (22) articulable from a closed configuration covering the input keypad to an open configuration uncovering the input keypad, relative to the main body region, the cover member (22) being operably configured to substantially surround and cover the front region of the main body portion leaving the back region of the main body portion uncovered when the cover member is in its closed configuration, the cover member being operably configured to move in a path, during said articulation, which substantially follows the profile contour of the main body portion; one or more guide members (28) operably associated with the main body portion, for guiding the path of movement of the articulable cover member, during said articulation.

We have also appreciated the possibility of providing one handed operation of the keypad cover, to close a cover to cover the handset keypad.

An embodiment of the present invention provides for the motorized operation of the keypad cover to automatically cover and reveal the handset keypad.

An embodiment of the invention is directed to a construction for a portable cellular telephone, though the concepts may be incorporated into virtually any portable telephone handset. In particular, the handset construction includes a moveable cover, or tambour, which serves to proves a cover for the user input keypad of the handset, when the cover is in its closed position.

A main body portion is provided for substantially containing the electronic functional components of the telephone handset apparatus and includes a user input keypad. The main body portion has a longitudinal axis, front and back regions extending substantially parallel to the longitudinal axis, a top region, a bottom region substantially connecting the front and back regions, and two opposed side regions. An articulable cover member is provided which is articulable from a closed configuration covering the input keypad to an open configuration uncovering the input keypad, relative to the main body region. The cover member is operably configured to substantially surround and cover the front region which leaving the back region uncovered when the cover member is in its closed configuration. The cover member is configured to move in a path, during articulation, which substantially follows the profile contour of the main body portion.

One or more guide members are provided which are associated with the main body portion and serve to guide the path of movement of the cover member during articulation.

In the preferred embodiment of the invention, one or more guide wheels are in operable driving/driven engagement with the tambour, in order to facilitate refurling of the tambour from the extended (open) configuration to the retracted (closed) configuration.

A further preferred embodiment of the present invention resides in a battery compartment being formed in the back region of the main body portion for containing a battery cell for supplying electrical power to the telephone. Through the foregoing construction, battery compartment, and in turn the battery cell contained therein, may be accessed when said cover member is in its closed configuration.

### BRIEF DESCRIPTION OF THE DRAWINGS

An embodiment of the invention will now be described with reference to the accompanying figures in which:

Fig. 1 is a top plan exploded view of the telephone handset construction according to one embodiment of the invention, shown in its open configuration.

Fig. 2 is shows the handset of the embodiment of Fig. 1 in its fully assembled and closed, configuration.

Figs. 3 and 4 illustrate partial, schematic side elevations of the handset embodiments of Figs. 1 and 2.

Fig. 5 is a perspective exploded view of a telephone handset construction according to one embodiment of the invention.

Fig. 6 is a sectional side elevation of the telephone handset of the embodiment of Figs. 1-3, taken along line 6-6 of Fig. 2.

Fig. 7 is a sectional elevation of the telephone handset of the embodiment of Figs. 1-3, taken along line 8-8 of Fig. 2.

Fig. 8 are perspective views of portions of a tambour, in accordance with the embodiment of Figs. 1-7, and a tambour having an inverted configuration, in which the "teeth" are on the outside surface and may be provided with a transversely varying contour, for decorative or gripping enhancement.

### DETAILED DESCRIPTION OF AN EMBODIMENT OF THE INVENTION

While this invention is susceptible to embodiment in many different forms, there are shown in the drawings and described in detail herein several specific embodiments, with the understanding that the present disclosure is to be considered as an exemplification of the principles of the invention and is not intended to limit the invention to the embodiments illustrated.

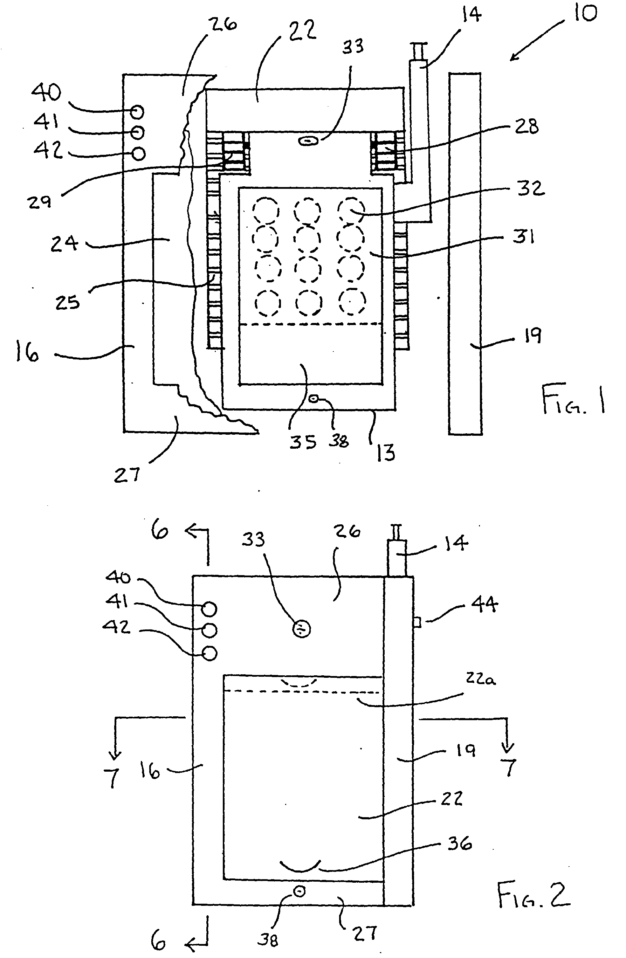

Handset 10 is shown in a top plan exploded view in Fig. 1 in its open configuration. Fig. 2 shows the handset in its fully assembled and close, configuration. Handset 10 includes main body portion 13, left side closure 16, right side closure 19, and cover or tambour 22. As shown, antenna 14 extends from the right side of the main body portion 13, but will project through a suitable notch or opening in the right side closure 19, when the handset is completely assembled, though the antenna 14 may extend from the left side 16 or another portion of the handset 10. As will be discussed elsewhere herein, while preferably the predominance of the electronics of the telephone will be contained within the main body portion, certain components may reside partially or completely in the tambour and/or the left or right side closures. When in its open position, illustrated by reference numeral 22a, tambour 22 reveals keypad 30 or alternatively touch screen 31.

In order to convey information to the user when the tambour 22 is in its closed position, certain displays, such as power on, battery status, paging functions, and other functions which can be addressed by a simple LED or by multi-colour LED (red to green for charging) may be accommodated by placing the requisite indicators (accompanied by an suitable indicia) on the side closures, as shown by reference numerals 40, 41, 42 in Figs, 1 and 2. The necessary electrical connections are provided between LED's 40, 41 and 42 and main body portion 13, in a manner known to those of ordinary skill in the art. A power on-off button 44 is provided to turn the telephone on and off with button 44 being shown disposed on the right side enclosure 19.

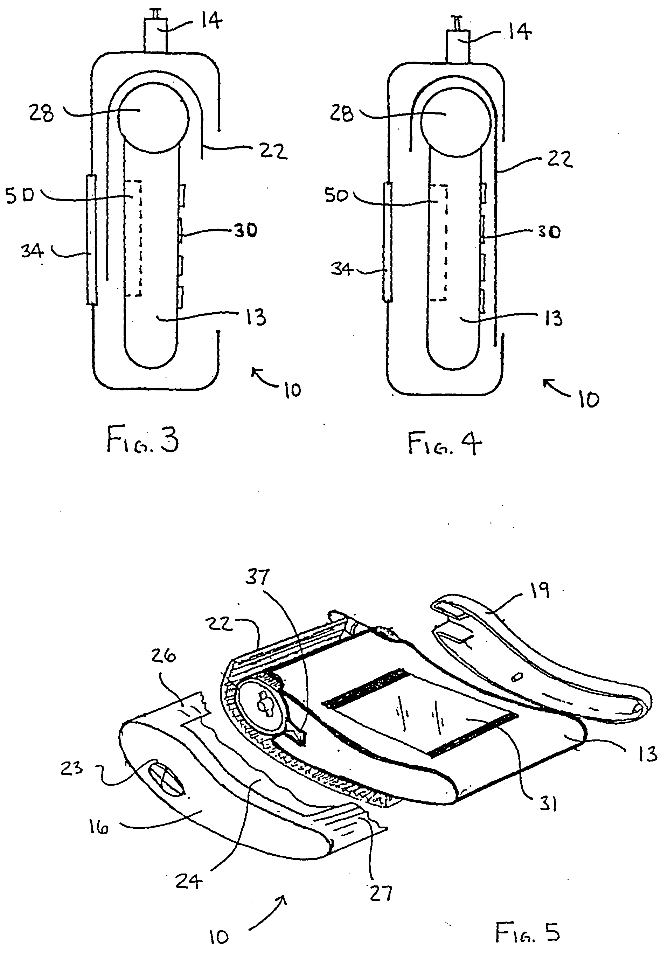

In one embodiment of the present invention a conventional push-button keypad is provided for the user to use to enter the digits of the telephone number of a party to be called (Figs. 3 and 4). The number dialled and/or other relevant information may be provided to the user on a conventional LED or LCD display (not shown) as is known in the art.

Alternatively, one or more regions of the tambour may be manufactured of a clear or translucent material, to enable the conventionally disposed status indicating LED's or main LCD display and the like, positioned on the front face of the main body portion, to be directly viewed through the closed tambour.

In the illustrated embodiment of the present invention an LCD touch screen 31 is provided in place of a conventional "push button" keypad, LCD touch screen 31 is shown positioned on the front of the main body portion 13 for, in one mode, presenting to the user a graphical display of a telephone keypad for permitting the user to enter the telephone number to be dialled, or operate other telephone functions. To "dial" a telephone number the user merely touches or taps the surface of the LCD touch screen 31 proximate the position of the displayed "keys" 32. In such an embodiment, the conventional display is omitted as necessary information can be conveyed to the user on the LCD touch screen 31. In addition to displaying a telephone dial keypad, the LCD touch screen 31 can serve to display a user interface for a number of other devices which can be integrated into the telephone, such as a calculator or address book. Accordingly, in the present description a keypad includes both a "conventional keypad" or a keypad provided by a touch screen.

Complementing the input device feature offered by the LCD touch screen 31, a handwriting input surface 35 is shown in Fig. 1 positioned proximate the lower edge of LCD touch screen 31. In a "phone mode" the LCD touch screen would display representation of a telephone keypad and, in particular, the typical buttons 32 found on most telephone handsets. To dial a desired telephone number the user would make contact with the LCD touch screen 35 by touching the position of the surface of the screen displaying the desired number with a finger or stylus. As an alternative to touching the LCD touch screen 35 to enter a telephone number, the user may enter a telephone number, digit by digit by "writing" the number with a finger or stylus on the handwriting input surface 35. Handwriting input surface 35 operates in combination with handwriting recognition software stored in the electronics on the main body portion 13 of the phone. The software serves to interpret the motion of the user's stylus or finger as it traces a letter, number or symbol on the handwriting input surface 35 toward identifying said input and entering an intended associated data element, such as an alpha-numeric character, or executing a predetermined command, such as "re-dial".

The mechanics of the movable cover of handset 10 may be readily understood upon inspection of Figs. 3-7. Fig. 3 of the drawings illustrates a partial side elevational view of the handset embodiment of Fig. 1 and is shown with tambour 22 in its open orientation. Fig. 4 illustrates a partial side schematic elevational view of the handset embodiment of Fig. 1 specifically illustrating tambour 22 in its closed orientation. Accordingly, it can be seen that tambour 22 serves to cover touch screen 31 thereby protecting its surface and preventing unintended operation of the device. As described herein, tambour 22 is a substantially flexible material the interior surface of which engages with drive wheel 28. As shown in Fig. 1, main body portion 13 of the telephone is contained within an exterior housing comprising side portion 19 and 16 which when assembled provide an opening on their front face through which the user may view and actuate keypad buttons 30 or alternatively touch screen 41. Keypad buttons 30 and touch screen 31 are each illustrated as being centrally positioned upon the top surface of the main body portion 13. As illustrated, left side portion 16 includes back panel 24 which connects to right side portion 19. Accordingly, in this alternative embodiment of the present invention, tambour 22 does not serve to provide the back outer surface of the telephone handset and instead tambour 22 carried within an outermost housing formed by rigid back panel 24. Though not shown in Fig. 5 it is contemplated that side 16 and 19 each contain the requisite track structures to engage with and carry tambour 22. One feature of the alternative embodiment is the ability for the battery cells which provide electronic power to the telephone handset to be contained within a compartment on the back surface of main body portion 13, instead of being piggy-backed to the back surface or inserted through a narrow opening in the side portion of the housing. In Figs. 3 and 4, battery cell 50 is shown residing within the main body portion 13. The user may thus obtain access to battery cell 50 when tambour 22 is in its closed position inasmuch as it no longer overlies the back surface of the telephone handset 10. It is contemplated that a door, or the like, located on the back surface 24 may be alternately opened or closed to permit access to battery cell 50 towards exchanging a fully charged battery for a discharged battery to thus permit continued operation of telephone handset 10.

Figs. 3 and 4 illustrate partial side elevations of the handset embodiment of Figs. 1 and 2. Tambour 22 is shown in its opened orientation in Fig. 3. Tambour 22 is generally flexible and is made so by the presence of transversely extending teeth/grooves 25. Main body portion 13 of handset 10 has one or more guide wheels 28, which are rotatable relative to the main body portion 13. In a preferred embodiment of the invention, two guide wheels 28 are provided, one on each side of the main body portion 13.

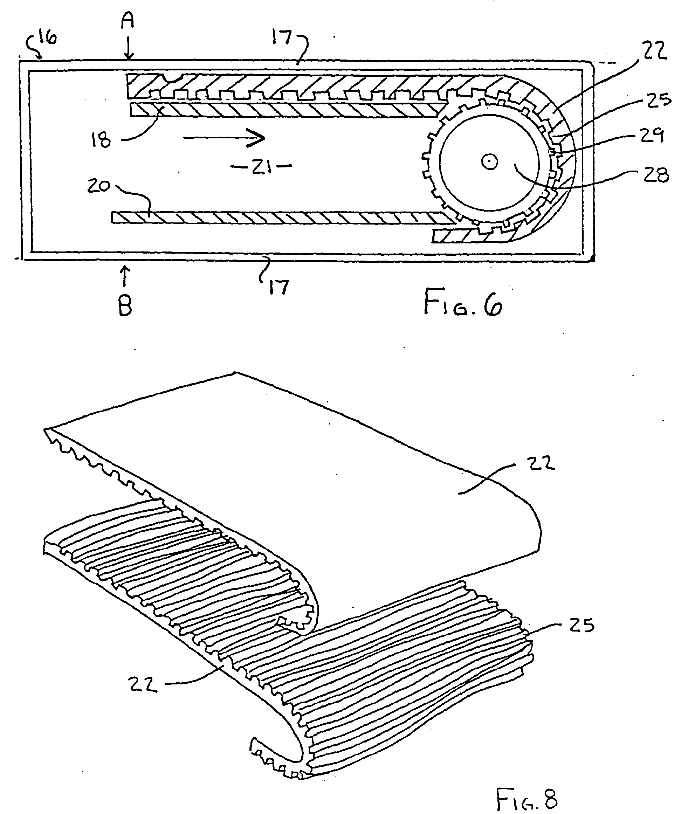

Preferably, each guide wheel 28 is configured in the form of a toothed gear, wherein the teeth 29 are sized and spaced to mate with the teeth/grooves 25 of the flexible tambour 22, when a portion of the flexible tambour 22 is furled around the main body portion 13 as depicted in Fig. 6. The teeth on the guide wheels and the teeth of the flexible portion of the tambour are shown as being rectangular or squared; however, teeth of other configurations may be employed, so long as when the tambour 22 is held in place against the guide wheels, by the side closures, as described herein, there is a driving/driven relationship between the tambour and the guide wheels 28. In an alternative embodiment, the guide wheels 28 and tambour 22 may be toothless, if the guide wheels 28 and tambour 22 are fabricated from complementary materials which will permit a satisfactorily frictional engagement there between, with the tambour being held in such engagement against the guide wheels by the side closures.

Left side closure 16 and right side closure 19 may be joined together with trim panels 24, 26 and 27, as illustrated in Fig 5. Panel 24 comprises a rigid surface which forms the back panel of the device 10 and protects the tambour 22 and main body portion 13. Panel 27 is a trim panel which forms the bottom facia of the phone while panel 26 forms the top facia of the phone. As illustrated in Fig. 2, top panel 26 includes speaker 33 which may be positioned on the inside surface of the panel in a manner so as not to be obstructed by tambour 22 and panel 27 includes microphone 38.

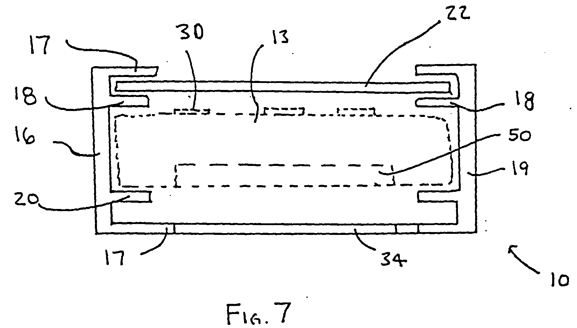

The manner in which the tambour is held in engagement with the guide wheels and guided in its movement around the main body portion is illustrated, in accordance with one embodiment if the invention in Figs. 6 and 7.

Fig. 6 is a sectional side elevation of the telephone handset of the embodiment of Figs. 1-4, taken along line 6-6 of Fig 2. As may be observed from Fig. 1, in an embodiment of the invention, tambour 22 has a width from side to side which is slightly greater than the width of the main body portion 13, so that an amount of tambour 22 projects laterally from each side of main body part 13. In order to provide a track for tambour 22 to follow, a portion of the periphery of left side closure 16 may be provided with a laterally extending outer track structure 17 extending around the periphery clockwise from point A to point B. Although particular locations for points A and B are shown in Fig. 6, it is to be understood, that as the specific contours of the overall housing may be varied by one of ordinary skill in the art having the disclosure before them, the particular locations of points A and B may be correspondingly changed as well. When suitably configured mating surfaces of left side closure 16 are attached to corresponding suitable configured surfaces of the main body portion 13, by a suitable method, such as adhesive, sonic welding, fasteners, etc., a portion of the lateral width of outer track structure 17 will overhang (or underhang) and enclose portions of the tambour 22.

Left side closure 16 is also provided with inner track structures 18 and 20, each of which likewise will project laterally, from wall 21, toward main body portion 13. The thickness of the main body portion 13 is reflected in the construction of left side closure 16, inasmuch as track structures 16, 17 and 20 define the path of movement of tambour 22, main body portion 13 should fit substantially in the space defined and dimensioned as between track structures 18 and 20. Right side closure 19 is also provided with corresponding configured inner track structures which likewise project laterally from the inner surface of right side closure 19 toward main body portion 13.

When the cover is to be opened, the tambour 22 will be pulled upward away from the bottom of the handset. With respect to Fig. 6, this means that the tambour 22 will be pulled to the right, as indicated by the arrow. In order to enable this to occur, the outer track structure either is completely absent, or extends laterally less than that portion between points A and B, and to the right thereof, so that the outer track structure does not overlap the rigid portion of the tambour. In such an event the left side closure 16 and right side closure 19 may be joined together by a front panel structure which overlays the top of main body portion 3 and includes an opening through which keypad keys may extend and a visual display may be viewed.

Fig 7 is a sectional elevation of telephone handset 10, taken along line 7-7 of Fig. 2 and looking away from the top of the handset, so that the guide wheels are not in view. Fig. 7 is shown in the configuration in which the tambour is in its closed, unfurled configuration. In addition, the main body portion has been illustrated in simplified form and in broken lines, and the antenna has been omitted from this drawing, for ease of illustration of this view. The overhanging and underhanging track structures 17, 18 and 20 can be seen to laterally overlap portion of the tambour 22, which, in its unfurled configuration, covers the front of the main body portion (above and below, as seen in Fig 7).

While the tambour 22 is illustrated in Figs 1-7 as having a substantially uniform thickness from one side edge to the other, and thus its outer surface is lower (or higher) than the adjacent peripheral edges of the left and right side closures, it is to be understood that, if desired, the contour of the tambour could be chosen to make the outer surface of the central (non-overlapped) region of the tambour flush with the peripheral edges of the left and right side closures.

Right side closure 19 may be provided with a substantially corresponding set of guide track structures, having suitable gaps or apertures provided therein for accommodating the antenna structure projecting from the right side of the main body portion 13, as illustrated in Fig. 1.

As previously mentioned, the guide wheels are in a driven/driving relations with the tambour 22 (either through inter-engaging teeth 25 on tambour 22 and teeth 29 on guide wheels 28, or through a frictional engagement of relatively smooth surfaces). Further, the guide wheels 28 are rotatable, relative to the main body portion 13 of the telephone handset. While the guide wheels 28 could be connected to each other by an axle extending through the width of the main body portion, this would take up space in the interior of the main body portion which could otherwise be occupied by electronics and other elements of the functioning telephone. Alternatively, the guide wheels may be mounted rotatably on short fixed or rotatable "dead" axles emanating from or affixed to the side walls of the main body part.

The guide wheels could be configured to be freewheeling relative to the main body portion. This construction would not particularly affect the movement of the tambour 22. To open and/or close tambour 22 one need only slide the tambour 22 in the desired direction and to that end finger grip 36 is provided. When closing the tambour 22, the tambour being drawn along the guide track structures would simply cause the guide wheels 28 to rotate. However, when opening tambour 22 by moving it into the main body portion 13 the flexible tambour 22 may be prompted to buckle or bind and may not be able to reliably drive the guide wheels.

Accordingly, it may be desirable to provide one or all of the guide wheels with motorized and non-motorized drive mechanisms in order to facilitate movement of the tambour. Many such mechanisms are known, such as the ratcheting spring biasing mechanisms employed in automotive and/or residential window shades. In such mechanisms, pulling the shade (or in the present invention, the tambour) out is accomplished against the increasing force of a spring (usually a coil spring). A ratchet mechanism prevents the shade (tambour) from retracting once the pulling force is released. However, once the shade has been pulled out beyond a certain predetermined distance, the ratchet releases, and the spring will rotate the guide wheel or pull the tambour causing the tambour to retract back into its furled or stowed orientation. Such mechanisms are well known, and accordingly, a detailed discussion and illustration of such a mechanism is omitted from the drawings, as being unnecessary for a complete understanding of the function of the telephone housing design.

Alternatively, pulling the tambour closed may be accomplished by winding against the bias of a spring, with a ratchet mechanism to prevent a sudden rewinding and thus opening of the tambour. A push button-type release mechanism such as are known in the art of auto window shades, may be provided for enabling the refurling of the tambour. The push button (e.g., button 23, the embodiment of Fig. 5) may be mounted in the side closure, but may engage a counterpart level or pawl 37 positioned in the surface of the side of the main body portion 13. By putting a spring bias on the guide wheel 29 and providing a spring loaded pawl 37 to stop the guide wheel 28 from retracting in an undesired manner, the tambour 22 can be closed and will stay in that position. By pressing on the release button 23, the pawl 37 may be moved out of engagement with the guide wheel, and the wheel will be free to move under the force of the spring (not shown) to open tambour 22. Again, such mechanisms are well known, and accordingly, a detailed discussion and illustration of such a mechanism is omitted from the drawings as being unnecessary for a complete understanding of the function of the telephone housing design.

Other known stored-energy drive mechanisms may be used as well. In addition, as an alternative method for effecting the movement of the tambour 22, if internal space and power considerations permit, a powered drive mechanism, such as a servo-motor connected to the guide wheels, may be employed to extend and/or retract the tambour. Such a powered drive system could be actuated by suitable controls, the buttons for which might, for example, be positioned on the side closures, and connected to the main body unit by electrical contacts on the side closure engaging counterpart contacts on the outer side surface of the main body unit.

The embodiments of Figs. 1-7 shows a slidable cover or tambour 22 (also shown in Fig. 8 for comparison purposes), in which the outer surface of the tambour is smooth, while the inner surface is provided with a toothed surface, to engage a toothed guide wheel, or alternatively a smooth surface to engage frictionally a smooth guide wheel. In an alternative embodiment of the invention, the outer surface may be provided with transverse grooves, which can be used to provide a textured gripping surface. That is, the surfaces of the teeth may have a convex or concave contour, proceeding from one side edge to the other. In the embodiment of Fig. 8, the tambour 22 is provided with such a toothed, contoured outer surface, but with a smooth inner surface (relying upon frictional driving engagement with the guide wheels). It may readily be understood that different combinations of smoothness or toothedness, or even knurling may be employed on either or both of the inner and outer surfaces of the tambour, by one of ordinary skill in that art, having the present disclosure before them, without departing from the scope of the invention.

Aside from the basic features described with respect to the embodiment of Figs. 1-7, the telephone handset construction of the present invention may be modified to accommodate a variety of features. For example, the antenna structure, which extends from the side of the main body portion, may be an extendible telescoping antenna. This antenna may be extended and retracted by a central core which may be driven by a pair of suitably positioned pinch rollers, or by a ball screw or worm gear arrangement, or the like, any of which may be readily disposed in gear-driven relationship to the guide wheel on that side of the housing, such that the antenna is automatically extended when the tambour is extended. Such mechanisms generally are known and as such detailed illustrations of them have been omitted for purposes of simplifying the illustration of the present disclosure.

The telephone handset construction of Figs. 1-8 is illustrated, for purposes of simplicity of illustration, as having a relatively simple and regular configuration, apart from the presence of the antenna. From a front elevation view, the handset has a substantially rectangular contour. From a side elevation, the handset is illustrated as having substantially straight front and back faces, and semicircular contours at its top and bottom. It is to be understood that these contours may readily be altered by one of ordinary skill in the art of telephone handset design, having the present disclosure before them, without departing from the scope of the present invention. For example, the handset configuration of Fig. 5 may be employed, which has a curved side elevation contour. The matter of providing a suitably guided tambour 22 to surround such a contour, is a matter of making sure that the tracks on the side closures substantially follow the contours of the outer surface of the handset.

Another feature incorporated into the handset design of the present invention, relates to the battery configurations which may be employed to power the handset. As shown in Figs. 3 and 4, the handset is powered by a battery cell. A battery cell 50 may be received within the body of the handset. By providing a suitable aperture 34 in the back panel 24, and providing locking and release structures (not shown) on the battery, side closure and/or main body, an operator can "pop out" a depleted battery, and then "snap in" a fresh one.

Fig. 7 of the drawings is a cross sectional view of telephone handset 10 taken along line 7-7 as shown in Fig. 2 wherein tambour 22 can be seen carried by tracks along each inside surface of respective sides 16 and 19. Battery cell 50 is shown carried within main body portion 13. Battery access door 34 is shown located on back panel 24 which permits access to battery cell 50 when tambour 22 is in its closed position.

The foregoing description and drawings merely explain and illustrate the invention and the invention is not limited thereto except insofar as the appended claims are so limited, inasmuch as those skilled in the art, having the present disclosure before them will be able to make modifications and variations therein without departing from the scope of the invention.

## Claims

1. A portable telephone handset apparatus (10) comprising:
a main body portion (13) for substantially containing the electronic functional components of the telephone handset apparatus (10) including a user input keypad (30), the main body portion (13) having a longitudinal axis, a top region, a bottom region substantially connecting the front and back regions, and two opposed side regions: characterised by
an articulable cover member (22) articulable from a closed configuration covering the input keypad to an open configuration uncovering the input keypad (30), relative to the main body region (13);
the cover member (22) being operably configured to substantially surround and cover the front region of the main body portion (13) leaving the back region of the main body portion uncovered when the cover member (22) is in its closed configuration, the cover member being operably configured to move in a path, during said articulation, which substantially follows the profile contour of the main body portion;
one or more guide members (16, 17, 20, 28) operably associated with the main body portion, for guiding the path of movement of the articulable cover member, during said articulation.

2. The telephone handset apparatus (10) according to claim 1, further comprising a drive mechanism (28) which upon actuation serves to move the articulatable cover member from an open configuration to a closed configuration, relative to the main body portion (13).

3. The telephone handset apparatus according to claim 2, wherein the drive mechanism comprises a coil spring.

4. The telephone handset apparatus according to claim 2, wherein the drive mechanism comprises an electric motor.

5. The telephone handset apparatus according to any of claims 1 to 4, further comprising a battery compartment formed in the back region of the main body portion for containing a battery cell for supplying electrical power to the telephone and whereby the battery compartment may be accessed when said cover member is in its closed configuration.

6. The telephone handset apparatus according to any of claims 1 to 5, wherein the cover member includes a transparent portion which permits a user to view the underlying main body portion when the cover is in its closed position.

7. A telephone handset apparatus according to any preceding claim, wherein the keypad comprises an LCD touch screen (31).

8. A telephone handset apparatus according to any preceding claim, comprising an integrated handwriting input surface (35).
